# NEUE EUROPÄISCHE PATENTSCHRIFT

(11) **EP 1 590 403 B2**
(45) Veröffentlichungstag und Bekanntmachung des Hinweises auf die Entscheidung über den Einspruch: **23.03.2011**
(45) Hinweis auf die Patenterteilung: 06.08.2008
(21) Anmeldenummer: 04703364.2
(22) Anmeldetag: 20.01.2004
(51) Int. Cl.: C08L 63/00, C08J 9/00, C08J 9/32, C08K 3/34, C08K 7/22

(54) **HITZEHÄRTBARE, THERMISCH EXPANDIERBARE ZUSAMMENSETZUNG MIT HOHEM EXPANSIONSGRAD**
THERMOSETTING, THEMOEXPANSIBLE COMPOSITION WITH A HIGH DEGREE OF EXPANSION
COMPOSITION THERMOEXPANSIBLE ET THERMODURCISSABLE PRESENTANT UN HAUT DEGRE D'EXPANSION

(30) Priorität: 22.01.2003 DE 10302298
(43) Veröffentlichungstag der Anmeldung: 02.11.2005
(73) Patentinhaber: Henkel AG & Co. KGaA, 40589 Düsseldorf (DE)
(72) Erfinder: MÜNZ, Xaver, 69117 Heidelberg (DE); BOBB, Larissa, 69181 Leimen (DE)
(86) Internationale Anmeldenummer: PCT/EP2004/000391
(87) Internationale Veröffentlichungsnummer: WO 2004/065485

(56) Entgegenhaltungen:
- EP-A- 0 500 009
- EP-A- 0 899 300
- EP-A1- 1 055 699
- WO-A-00/52086
- WO-A-02/49836
- WO-A1-2003/022953
- CA-A1- 2 362 894
- US-A- 5 389 435
- US-A1- 2004 058 181

## Beschreibung

Die Erfindung betrifft expandierbare, thermisch härtbare Zusammensetzungen auf Basis von Epoxidharzen, die einen hohen Expansionsgrad aufweisen, sowie Verfahren zum Versteifen und/oder Verstärken von Bauteilen mit dünnwandigen Strukturen, insbesondere Karosseriebauteile im Fahrzeugbau.
Leichtbauteile für eine konstant maßhaltige Serienfertigung mit hoher Steifigkeit und Strukturfestigkeit werden für viele Anwendungsfelder benötigt. Insbesondere im Fahrzeugbau ist wegen der dort gewünschten Gewichtsersparnis ein hoher Bedarf für Leichtbauteile aus dünnwandigen Strukturen die trotzdem ausreichende Steifigkeit und Strukturfestigkeit besitzen. Ein Weg zur Erzielung hoher Steifigkeit und Strukturfestigkeit bei möglichst niedrigen Gewicht des Bauteils benutzt Hohlteile, die aus verhältnismäßig dünnem Blech oder Kunststoffplatten gefertigt sind. Dünnwandige Bleche neigen jedoch zu leichten Deformation. Daher ist es bereits seit einiger Zeit bekannt, bei Hohlkörperstrukturen diesen Hohlraum mit einem Strukturschaum auszuschäumen wodurch einerseits die Deformation oder Verformung verhindert oder minimiert wird und andererseits Festigkeit und Steifigkeit dieser Teile erhöht wird. Für flächige Teile von Automobilkarossen wie Türen, Dachteilen, Motorraumhauben oder Kofferraumdeckeln ist es auch bekannt, die Steifigkeit und Festigkeit dieser Teile dadurch zu erhöhen, daß schichtförmig Laminate auf der Basis von expandierbaren oder nicht expandierbaren Epoxidharzen oder Polyurethanharzen auf diese Teile aufgebracht werden und mit diesen fest verbunden werden.
Üblicherweise sind derartige geschäumte Verstärkungs- und Versteifungsmittel entweder Metallschäume oder sie enthalten ein thermisch härtbares Harz oder Bindemittel wie z.B. Epoxidharze. Diese Zusammensetzungen enthalten in der Regel ein Treibmittel, Füllstoffe und verstärkende Füllstoffe wie z.B. Mikrohohlkugeln aus Glas. Vorzugsweise haben solche Schäume im aufgeschäumten und ausgehärteten Zustand eine Dichte von 0,3 bis 0,7 g/cm³. Diese Schäume sollen Temperaturen von mehr als 150°C vorzugsweise mehr als 180°C zumindest kurzfristig schadlos überstehen. Derartige schäumbare, thermisch härtbare Zusammensetzungen enthalten in der Regel weitere Bestandteile wie Härtungsagenzien, Prozesshilfsmittel, Stabilisatoren, Farbstoffe oder Pigmente, gegebenenfalls UV-Absorber sowie haftungsverstärkende Bestandteile.

Wenn Strukturbauteile von Automobilkarosserien mit expandierbaren thermisch härtbaren Harzzusammensetzungen versteift werden, werden diese Harze sehr häufig beim Durchlaufen der Automobilkarossen durch die Lackiertrockenöfen ausgehärtet. Die im Lackierprozess angewandten Härtungstemperaturen sind relativ niedrig und die auf die Autokarosserie wirkende Temperatur kann sehr ungleichmäßig verteilt sein, so daß die Automobilkarosse kältere Teile während des Durchlaufs durch den Lackierofen aufweist, die bei einigen thermisch expandierbaren Schäumen eine volle Expansion verhindert. Zusätzlich ist das Temperaturprofil innerhalb eines Lackierofens ungleichmäßig verteilt (Beispielsweise: kann die Temperatur im Bodenbereich signifikant niedriger sein als im Deckenbereich des Ofens). Dies hat zur Folge, daß thermisch härtbare Schaumteile im unteren Bereich der Fahrzeugkarosse relativ niedrigen Aushärtungstemperaturen ausgesetzt ist. Dies bedeutet, daß thermisch härtbare schäumbare Zusammensetzungen für die genannten Anwendungsfelder einen hohen Treibgrad auch bei relativ niedrigen Temperaturen aufweisen müssen.

Die EP-A-0 798 062 schlägt Bauteile aus metallischem Schaumwerkstoff vor, bei denen der metallische Schaumwerkstoff aus einem Metallpulver und Treibmittel hergestellt wird und gegebenenfalls zwischen massivmetallischen Blechteilen in einer Presse bei hohen Temperaturen und hohen Drucken geformt werden. Ein derartiges Verfahren eignet sich nur für großformatige Bauteile, die außerhalb der Montagelinie eines Kraftfahrzeuges separat hergestellt werden und anschließend in den normalen Montageprozeß eingefügt werden. Das Einbringen und Aufschäumen von metallischen Schaumwerkstoffen ist nicht unter den Prozeßbedingungen einer normalen Fahrzeugmontagelinie möglich.

Die US-A-4,978,562 beschreibt einen spezifisch leichten, verstärkenden Türbalken aus einem Verbundmaterial bestehend aus einem Metallrohr, das teilweise durch ein spezifisch leichtes Polymer mit Zellstruktur gefüllt ist. Es wird vorgeschlagen, härtbare Harze auf der Basis von Epoxidharzen, Vinylesterharzen, ungesättigten Polyesterharzen und Polyurethanharzen mit den entsprechenden Härtern, Füllstoffen und zellbildenden Agenzien in einem Extruder zu mischen, diese Mischung zu einem Kern auszuhärten und so in das Metallrohr einzubringen, daß der Kern durch Reibungskräfte oder mechanisch in dem Rohr fixiert wird. Alternativ kann der Polymerkern aus flüssigem oder pastösem polymeren Material durch Gießen hergestellt werden und in das Rohr eingepreßt werden. Reaktive, hitzehärtbare und thermisch expandierende Formkörper werden nicht offenbart.

Die US-A-4,769,391 beschreibt ein vorgeformtes Verbundeinlegeteil zum Einlegen in einen hohlen Strukturkörper. Dieses Einlegeteil enthält eine Vielzahl thermoplastischer Granulate aus einer Mischung eines thermoplastischen Harzes und nicht expandierten, expandierbaren Mikrohohlkugeln und einer Matrix aus expandiertem Polystyrol, das die vorgenannten Granulate hält. Das thermoplastische Harz der Granulate kann dabei ein Thermoplast sein, wie beispielsweise ein thermoplastischer Polyester, oder es kann ein hitzehärtbares Epoxidharz sein. Nach dem Einlegen des Teils in den auszufüllenden Hohlkörper wird das Bauteil auf eine Temperatur erhitzt, die ein "Verdampfen" des expandierten Polystyrols bewirkt - Verdampfen bedeutet hier Abbau des expandierten Polystyrol zu einem dünnen Film oder Ruß. Gleichheit expandieren die thermoplastischen Granulatkörner und härten gegebenenfalls aus, wobei je nach Expansionsgrad des Granulates mehr oder weniger große Hohlräume zwischen den einzelnen expandierten Granulatteilchen bestehen bleiben.

In analoger Weise beschreiben die US-A-4,861,097 und US-A-4,901,500 spezifisch leichte Verbundbalken aus geschäumten Polymeren und metallischen Strukturen zur Verstärkung von Fahrzeugtüren. Nach dieser Lehre wird der polymere Kernteil zunächst durch Herstellen eines flüssigen oder pastösen Verstärkungsmaterials gebildet, das anschließend in eine kanalartige Struktur injiziert oder gegossen wird und anschließend ausgehärtet wird. Danach wird dieses ausgehärtete Kernteil in die metallische Hohlkörperstruktur eingebracht. Alternativ kann der Kern vorgeformt oder durch Spritzguß vorgegossen werden und anschließend in den Hohlraum eingelegt werden.

Die WO 89/08678 beschreibt ein Verfahren und Zusammensetzungen zur Verstärkung von Strukturelementen, wobei das polymere verstärkende Material ein zweikomponentige Epoxysystem ist, bei dem die eine Komponente eine teigartige Masse auf der Basis von Epoxidharzen ist und die zweite Komponente eine Mischung aus Füllstoffen, einem Farbpigment sowie einem flüssigen Härtungsagens von teigiger Konsistenz ist. Unmittelbar vor der Einfüllung des verstärkenden Materials in die Hohlstruktur werden die beiden Komponenten gemischt, in die Hohlkörperstruktur eingetragen und ausgehärtet, wobei die Hohlkörperstruktur gegebenenfalls vorgeheizt werden kann.

Die WO 96/37400 beschreibt ein W-förmiges Verstärkungsgebilde, das ein thermisch expandierbares, harzartiges Material enthält und vor der Aushärtung in den zu verstärkenden Hohlkörper eingebracht wird. Die verstärkende polymere Matrix besteht vorzugsweise aus einem einkomponentigen, teigartigen System enthaltend ein Epoxidharz, einen Acrylnitril-Butadienkautschuk, Füllstoffe, hochfeste Glaskugeln, einen Härter sowie einen Beschleuniger und ein Treibmittel auf der Basis einer Azo-Verbindung oder einer Hydrazid-Verbindung.

Die WO 98/15594 beschreibt geschäumte Produkte für Anwendungen in der Automobilindustrie auf der Basis von vorzugsweise flüssigen, zweikomponentigen Epoxysystemen, bei denen die eine Komponente aus einem flüssigen Epoxidharz und Metallcarbonaten oder -bicarbonaten und die andere Komponente aus Pigmenten, gegebenenfalls Hohlkugeln sowie Phosphorsäure besteht. Beim Mischen der beiden Komponenten härten diese Zusammensetzungen unter Aufschäumen aus. Anwendungen zur Verstärkung oder Versteifung von hohlen Strukturen werden nicht offenbart.

Die polymeren Materialien des vorgenannten Standes der Technik eignen sich entweder nicht zur Herstellung von vorgeformten Formteilen, die zu einem späteren Zeitpunkt durch Erhitzen thermisch expandieren und dabei hitzehärtbar sind oder, falls sie sich dazu eignen, haben sie in der Regel eine stark klebrige Oberfläche, die zu einer Verschmutzung der Lagerflächen führt, und andererseits Schmutz und Staub bindet. Außerdem behindert eine klebrige Oberfläche dieser Formteile die Handhabung und insbesondere die Lagerung, z. B. das Stapeln mehrerer Teile übereinander. Aus diesem Grunde werden Formteile des Standes der Technik mit einer Schutzfolie versehen, die unmittelbar vor der Anwendung entfernt wird. Derartige Schutzfolien machen jedoch die Herstellung und Anwendung von solchen Formteilen aufwendiger, zudem muß die Schutzfolie nach Entfernung entsorgt werden, was zusätzliche Kosten verursacht.

Zur Verminderung der Oberflächenklebrigkeit derartiger Formteile schlägt die WO00/52086 vor, hitzehärtbare, thermisch expandierbare Formkörper aus einer Mischung bestehend aus mindestens einem festen reaktiven Harz, mindestens einem flüssigen reaktiven Harz, mindestens einem flexibilisierend wirkenden reaktiven Harz sowie Härtern und/oder Beschleunigern oder Treibmitteln herzustellen. Diese Formkörper eignen sich zum Versteifen und/oder Verstärken von dünnwandigen Metallkonstruktionen sowie zum Versteifen von hohlen metallischen Leichtbaukonstruktionen. Gegenüber bekannten hitzehärtbaren, thermisch expandierbaren Formkörpern zeichnen sich die Formkörper gemäß der Lehre dieser Schrift durch verbesserte Formstabilität im ungehärteten Zustand sowie durch eine geringe Oberftächenktebrigkeit aus. Erzielt werden die Eigenschaften Verarbeitbarkeit und Formstabilität durch Mischen von Epoxidharzen mit unterschiedlichem Schmelzpunkt. Allerdings ist beispielsweise die verminderte Oberflächenklebrigkeit immer nur in einem sehr eng begrenzten Temperaturintervall zu erzielen, so daß eine Formulierung, die im Winter zwar klebfrei ist, im Sommer eine stark klebrige Oberfläche aufweist. Weiterhin erfordert diese Vorgehensweise den Einsatz von großen Mengen an teuren Harzen und Härtungssystemen. Insbesondere für die kostengünstige Herstellung derartiger expandierbarer Formkörper im Spritzgußverfahren treten immer wieder Schwierigkeiten bei der Fertigung und Handhabung auf, dies ist für eine Prozeß-Sicherheit des Herstellverfahrens unerwünscht.

US-A-4444818 beschreibt einen thermisch härtbare Klebstoffschichtkörper, der aus einer wärmehärtbaren Harzschicht in Form eines "Prepregs" aufgebaut ist, in dem ein verstärkendes Material eingebettet ist. Weiterhin schlägt diese Schrift vor, ein flachgedrücktes röhrenförmiges Material auf einer Seite des Prepregs anzubringen, das beim Erwärmen des verstärkenden Schichtkörpers seine ursprüngliche röhrenförmige Form wieder annehmen kann. Der Prepregs - Schichtkörper kann aus zwei unterschiedlichen, thermisch härtbaren Harzschichten bestehen. Als Bindemittel für die thermisch härtbaren Schichten des Prepregs werden Epoxidharze vorgeschlagen. Der röhrenförmige oder schlauchartige Körper soll dabei aus Polyethylen, Ethylenvinylacetatcopolymeren, Polypropylen, Polystyrol oder PVC oder auch Nitrilkautschuk bestehen. Das Herstellverfahren für derartige verstärkende Schichtkörper ist aufwendig.

Die EP-A-230666 beschreibt ein Verfahren zur Herstellung einer einkomponentigen hitzehärtbaren Zusammensetzung, welche beim Erhitzen ein Urethan-Epoxy-Silicon Interpenetrating Network (IPN) System bildet.
Diese Schrift schlägt vor, aus diesen Zusammensetzungen metallverstärkende Schichtkörper ("Patches") herzustellen, die direkt auf ölhaltigen Metalloberflächen wie öligen Stahlblechen haften. Das IPN soll dabei durch eine Polyepoxyverbindung, ein blockiertes Polyaminhärtungsagens und ein kettenverlängertes Polyurethanprepolymer gebildet werden, bei dem einige Isocyanatgruppen des Pre-polymers mit einem hydroxyfunktionellen Polysiloxan blockiert sind.

EP-A-297036 beschreibt einen Schichtkörper bestehend aus einem Träger, z.B. harzgebundenen Glasfasergewebe auf das eine Schicht aus wärmehärtendem Harz aufgebracht ist. Um die klebrige Harzoberfläche zu schützen, ist eine Abdeckfolie aus einem bei Wärmeeinwirkung schrumpfenden Material vorgesehen. Diese Folie soll mit Schlitzen versehen sein, die sich nach einer Wärmevorbehandlung zum Öffnen erweitern, so daß ein Teil der klebrigen Oberfläche frei liegt. Damit soll es nicht mehr notwendig sein, vor dem Anbringen des Schichtkörpers die Schutzfolie abzuziehen. Über die Zusammensetzung der klebrigen Harzschicht werden keine Angaben gemacht.

EP-A-376880 beschreibt eine Schichtkörperanordnung zur Versteifung von flächigen Körpern umfassend eine Trägerschicht aus einem aushärtbaren Kunstharzmaterial in dem ein damit verbundenes oder darin eingebettetes Verstärkungsmaterial vorgesehen ist. Weiterhin ist eine auf der Trägerschicht aufgebrachte, dem zu versteifenden Körper zugewandte, Klebstoffschicht vorgesehen, die ein ggf. mit Füllstoffen und sonstigen Additiven versehenes härtbares Kunstharzmaterial umfaßt. Um einen möglichst hohen Verstärkungseffekt ohne Deformation des flächigen Körpers (Blechs) zu erreichen, soll die Klebstoffschicht nach der Härtung des Kunstharze einen höheren Elastizitätsmodul als das gehärtete Kunstharzmaterial der Trägerschicht besitzen, gleichzeitig sollen Trägerschicht und Klebstoffschicht im ausgehärteten Zustand zumindest annähernd die gleiche Wärmedehnzahl wie der zu versteifende flächige Körper aufweisen. Die Trägerschicht soll dabei aus einem Glasfasergewebe und einem Gemisch aus flüssigen Epoxidharzen und festen Epoxidharzen sowie Härtern bestehen, die Klebstoffschicht soll im Wesentlichen aus wärmehärtenden, selbsthaftenden Kunstharzen bestehen, die ebenfalls aus flüssigen und festen Epoxidharzen sowie Härtern und Füllstoffen aufgebaut ist.

In ähnlicher Weise beschreibt die EP-A-298024 ein Verfahren zum Versteifen von Blechen und Kunststoff-Formkörpern mit Hilfe eines ein- oder mehrschichtigen flächigen Versteifungskörpers, bei dem zumindest eine Schicht aus einer unter Wärmeeinfluß härtenden Kunstharz besteht. Dieser Versteifungskörper soll dabei zunächst einer ersten Wärmebehandlung unterworfen werden, bei der mindestens eine Oberfläche des Versteifungskörpers durch diese erste Wärmebehandlung klebrig wird. Anschließend soll der Versteifungskörper mit der klebrigen Oberfläche auf das zu versteifende Element aufgebracht werden und anschließend soll der Versteifungskörper einer zweiten Wärmebehandlung unterworfen werden, bis alle Schichten des Versteifungskörpers ausgehärtet sind. Es wird vorgeschlagen, daß eine Schicht des Verstärkungskörpers aus hitzehärtenden Epoxidharzen aufgebaut ist, die ggf. Glasfasergewebe enthält. Als zweite Schicht, die bei der ersten Wärmebehandlung klebrig werden soll, wird ein Schmelzkleber auf Epoxidbasis, eventuell auf Polyurethan- oder Copolyesterbasis vorgeschlagen. Alternativ soll diese Schicht aus einer unter Wärmewirkung schrumpfenden Folie bestehen, so daß nach Schrumpfung eine klebrige Schicht freigelegt wird.

Die WO 95/27000 beschreibt eine härtbare, spritzbare Zusammensetzung zur Verstärkung von dünnen, harten Blechen oder Platten. Die Zusammensetzung ist aufgebaut, aus wärmehärtbaren Harzen, expandierbaren Mikrohohlkugeln und teilchenförmigen Verstärkungsmaterial aus gemahlenen Glasfasern, gemahlenen Kohlefasern und deren Mischungen. Als hitzehärtbare Harz-Zusammensetzungen werden die verschiedenen Epoxidharze auf der Basis von Glycidylethern, Glycidylestern, Glycidylaminen vorgeschlagen.

Die CA-A-2241073 beschreibt ein folienverstärkendes Versteifungslaminat für steife, dünnwandige Substrate. Gemäß der Lehre dieser Schrift soll das Polymer in einem Lackofen unter Expansion aushärten und sich dabei innig mit der inneren Oberfläche des zu verstärkenden Basissubstrates verbinden. Angaben über die Bindemittel-Zusammensetzung werden in dieser Schrift nicht gemacht.

Wie aus den vorstehend genannten Dokumenten hervorgeht, werden für flächen- oder rahmenversteifende Schichtkörper im Wesentlichen epoxybasierte Bindemittelzusammensetzungen oder Zusammensetzungen auf der Basis von Polyurethanen vorgeschlagen. Diese bewirken zwar in der Regel die geforderte Versteifungsleistung, erfüllen aber nicht den Wunsch nach einer arbeitshygienischen und gesundheitlich unbedenklichen chemischen Basis. Reaktive Polyurethansysteme enthalten in aller Regel noch Reste von monomeren Diisocyanaten. Aus diesem Grunde müssen die Arbeitsplätze bei Verwendung derartiger Zusammensetzungen entsprechend mit Absaugeinrichtungen eingerichtet sein, um die an diesen Arbeitsplätzen eingesetzten Personen vor der Exposition von Isocyanaten schützen zu können. Bei epoxybasierten Systemen wird die Formstabilität zum einen durch die Zusammensetzung der Epoxidharzmischung bestimmt, hierbei versucht man den Anteil an flüssigen Epoxidharzen mit einem Molekulargewicht unter 700 zu vermeiden oder zumindest zu minimieren, da diese niedermolekularen Epoxyverbindungen bei Hautkontakt allergische bzw. sensibilisierende Reaktionen auslösen können. Andererseits weisen solche ungehärteten Schichtkörper (Laminate) oder Formkörper mit einem hohen Anteil an flüssigen, niedermolekularen Epoxiden eine gute Haftung auf den zu versteifenden Untergründen auf, sie sind jedoch wenig beständig gegen die Prozessflüssigkeiten wie Wasch- und Reinigungsbäder, Phosphatier- und Konversionsbäder sowie den Elektrotauchlack. Insbesondere die Waschflüssigkeiten werden bei hohem Druck und Temperaturen bis zu 75°C appliziert.

Um eine hohe Strukturfestigkeit und insbesondere Druckfestigkeit bei den Formkörpern bei geringen spezifischen Gewicht zu erzielen, schlagen viele der oben genannten Dokumente die Verwendung von Glas-Mikrohohlkugeln als leichten Füllstoff vor, der trotzdem ausreichend hohe Druckfestigkeit des ausgehärteten Schaumkörpers gewährleisten soll. Diese Glasmikrohohlkugeln sind also ein wesentlicher Bestandteil zur Gewichtsreduzierung und zur Erzielung einer hohen Druckfestigkeit, da hierdurch ein kontrollierter Zusammenbruch der Struktur des Schaumes beim Druckversuch bzw. während eines Unfalls beim Crash bewirkt wird. Die Verwendung von Glasmikrohohlkugeln hat jedoch einige gravierende Nachteile:
- Sie sind teuer und verteuern somit den Strukturschaum, da sie zu einem erheblichen Anteil eingesetzt werden müssen.
- Oberflächenaktive Substanzen wie Silane oder Titanate, die bekannterweise zur Verbesserung des Haftverhaltens des Strukturschaums auf den metallischen Substraten eingesetzt werden, reagieren auf der Oberfläche der Glasmikrohohlkugeln ab und reduzieren damit deren Wirkung an der Grenzfläche des Substrats. Dadurch werden die Haftungseigenschaften des Strukturschaums insbesondere nach Wärme oder Feuchtigkeitslagerung drastisch verschlechtert.
- Der Fertigungsprozeß der Strukturschäume wird dadurch erschwert, daß die spröden Glasmikrohohlkugeln druck- und scherempfindlich sind, so daß Zusammensetzungen, die Glasmikrohohlkugeln enthalten, nur bei relativ niedrigen Drücken gepumpt werden können und auch nur bei relativ niedrigen Drücken extrudiert oder im Spritzguß verarbeitet werden können. Dies führt zu langen Prozeßzeiten und somit hohen Produktionskosten. Außerdem läßt sich nicht vollständig vermeiden, daß ein Teil der Mikrohohlkugeln zerstört werden, wodurch die Dichte des Strukturschaumes in unerwünschter Weise zunimmt.

Die Erfinder haben sich daher die Aufgabe gestellt, die Glasmikrohohlkugeln durch "neutrale" Füllstoffe zu ersetzen wobei die Crash- und Druckfestigkeitseigenschaften der thermisch expandierten und ausgehärteten Schaumzusammensetzungen erhalten bleiben sollen, gleichzeitig soll der effizienter Einsatz von Silanen und Titanaten und ähnlicher Verbindungen zur Optimierung der Haftungseigenschaften möglich sein. Im Druckversuch soll das gewünschte Bruchverhalten sich in ähnlicher Weise wie bei den Glas-Mikrohohlkugeln enthaltenen Schäumen dadurch auszeichnen, daß bei Belastung der Strukturschaum nicht spröde bricht, sondern bei fortschreitender Belastung die Struktur definiert zerstört wird und ein möglichst hohes Kraftniveau gehalten werden kann.

Ferner betrifft auch die WO-A-02/49836 Strukturschäume zum Verstärken von Hohlräumen bei Automobilen. Diese werden erhalten durch Erhitzen von thermisch-härtbaren Formulierungen auf Basis von Epoxidharzen, die Treibmittel, Bortrihalogenid-Amin-Addukte als Härter, Glashohlkugeln und thixotrope Mittel enthalten.

Die EP-A-0 899 300 beschreibt eine Mischung auf Basis von Epoxidharz, die ferner ein pulverförmiges Methylacrylat-Polymer, ein thermisch-aktives Härtungsmittel, ein thermisch-zersetzbares Schäummittel und eine Mischung von anorganischen Salzen als Füllstoff enthält. Auch diese Mischung dient zum Verstärken von Fahrzeugkörpern.

Die EP-A-0 500 009 betrifft eine schäumbare Epoxidharz-Formulierung, enthaltend ein flüssiges Epoxidharz, ein latentes Härtungsmittel, ein Schäummittel, ein oberflächenaktives Mittel sowie ein gummiartiges Elastomer oder ein pulverförmiges halogenfreies thermoplastisches Harz. Diese Formulierungen finden Verwendung zur Herstellung von dichten Schäumen, beispielsweise zum Einsatz in Automobilen.

Die US--5 389 435 beschreibt flammhemmende Verbundstoffe, bestehend aus einem Laminat, das ein Glasgemenge, überzogen mit einem anorganischen Füllstoff und einem Epoxidharz, sowie einem strukturellen Verbundstoff aus Graphitfasern und Epoxidharz enthält.

Die erfindungsgemäße Lösung der Aufgabe ist den Patentansprüchen zu entnehmen.

Sie besteht im wesentlichen in der Bereitstellung von expandierbaren, thermisch härtbaren Bindemittel-Zusammensetzungen, die
(a) mindestens ein flüssiges Epoxidharz,
(b) mindestens ein festes Epoxidharz,
(c) mindestens ein Treibmittel,
(d) mindestens einen Härter,
(e) mindestens einen glimmerhaltigen Füllstoff der Muskovit-Glimmer und Quarz enthält,
enthalten, wobei die Zusammensetzung keine Glashohlkugeln enthält.

Thermisch expandierbare Formkörper werden aus den erfindungsgemäßen Zusammensetzungen vorzugsweise im Spritzgußverfahren bei möglichst niedrigen Temperaturen hergestellt.

Weiterhin können aus den erfindungsgemäßen Zusammensetzungen Schichtkörper (Laminate) durch Extrusion, Walzenauftragsverfahren oder Spritzverfahren hergestellt werden.

Ein Gegenstand der vorliegenden Erfindung ist somit das Bereitstellen von, vorzugsweise nicht klebrigen, Formkörpern zur Verstärkung und Versteifung von dünnwandigen Metallbauteilen, insbesondere metallischen Hohlkörpern, die
- thermisch härtbar sind
- einen hohen thermischen Expansionsgrad aufweisen,
- gute Versteifungs- und/oder Verstärkungswirkung für dünnwandige metallische Strukturen aufweisen,
- im ausgehärteten Zustand eine hohe Druckfestigkeit aufweisen,
- im Formgebungsprozeß, insbesondere im Spritzgußverfahren bei niedrigen Temperaturen verarbeitet werden können und vorzugsweise auf einen Träger aufgebracht werden,
- bei Temperaturen bis 50°C nach dem Spritzguß dimensionsstabil sind,
- ohne aufwendige und teure Verpackung transportierbar sind,
- sowohl von den Materialkosten als auch von den Herstellkosten ökonomisch herstellbar sind.

Die vorliegende Erfindung umfaßt also ein Verfahren zum Versteifen und/oder Verstärken von Karosseriebauteilen, das die folgenden Wesentlichen Verfahrensschritte beeinhaltet:

In einer ersten Stufe werden die vorgenannten Bindemittelbestandteile bei Temperaturen unterhalb von 110 °C homogen gemischt und anschließend in eine Spritzgießanlage transferiert. Dort wird dieses Bindemittel bei Temperaturen von 60 °C bis 110 °C, vorzugsweise bei Temperaturen von 70 °C bis 90 °C unter temperierten Bedingungen in eine Spritzgussform eingespritzt. Ggf. befindet sich in dieser Form ein Träger aus Metall oder thermoplastischen Werkstoffen auf den das expandierbare Bindemittel aufgespritzt wird. Anschließend erfolgt die Abkühlung des Formteils auf Temperaturen unterhalb von 50 °C, beim Entformen ist die Oberfläche des expandierbaren Bindemittels klebfrei, so daß die expandierbaren Formkörper ohne besonderen Aufwand verpackt werden können und auch im Sommer problemlos lange Transporte in südliche Länder überstehen, ohne, daß der Einsatz von Kühlwagen erforderlich ist.

Zur Endanwendung wird das expandierbare Formteil auf das flächige metallische Substrat aufgebracht oder in den zu versteifenden Hohlraum, beispielsweise einer Fahrzeugkarosserie, eingebracht und fixiert. Bei den nachfolgenden Prozesswärmen der Lackieröfen wird bekanntlich die Fahrzeugkarosserie auf Temperaturen zwischen 110 °C und 200 °C gebracht, bei diesem Erwärmen expandiert das Volumen des Formkörpers um 50 bis 300% und die Reaktionsharz-Matrix härtet zu einem Duroplasten aus.

Ein Gegenstand der vorliegenden Erfindung ist somit die Verwendung der expandierbaren Formkörper zur Versteifung und Verstärkung von metallischen Hohlstrukturen, insbesondere von Karosseriehohlteilen wie Karosserierahmen, Karosserieträgern, Karosseriesäulen sowie breiteren Fugen und Spalten zwischen Karosserieteilen im Automobilbau.

Ein weiterer Gegenstand der vorliegenden Erfindung ist die Verwendung der erfindungsgemäßen Zusammensetzung zur Bereitstellung von mehrschichtigen Laminaten zum Versteifen von flächigen Bauteilen. Dabei sind diese Laminatkörper aus mindestens einer thermisch härtbaren expandierbaren Schicht der Bindemittelzusammensetzung aufgebaut und mindestens einer Schicht eines Verstärkungsmittels. Gegebenenfalls kann diese Laminat nach der Erstellung auf einer Seite mit einer Schutzfolie versehen sein, die vor dem Aufbringen auf das zu versteifende Substrat wieder entfernt wird. "Flache Körper" oder "flächige Bauteile" im Sinne dieser Erfindung beinhalten nicht nur vollständig planare Strukturen sondern auch Fahrzeugstrukturen, die leicht gekrümmte oder gebogene Teilflächen enthalten, wie sie in Türen, Dachpartien, Kofferraumdeckeln, Motorraumhauben und ähnlichen Bauteilen auftreten.

Die vorliegende Erfindung beinhaltet somit auch ein Verfahren zum Versteifen oder Verstärken von flächigen Bauteilen aus Metall oder Kunststoff, daß die folgenden wesentlichen Verfahrensschritte beinhaltet:
a) Mischen der Zusammensetzungs- Bestandteile nach mindestens einem der Ansprüche 1 bis 13 bei Temperaturen unterhalb von 110° C,
b) Extrusion der Zusammensetzung bei Temperaturen von 60°C bis 110°C, vorzugsweise 70°C bis 90°C, ggf. auf ein textiles Flächengebilde oder Metallband oder einen Träger,
c) Abkühlen des so geformten Schichtkörpers (Laminats),
d) Aufbringen des Laminates auf das metallische Substrat gegebenenfalls unter Erwärmen auf den Erweichungsbereich des Schichtkörpers
e) Erwärmen des Substrats auf Temperaturen zwischen 110°C und 200°C, vorzugsweise zwischen 130°C und 180°C, wobei die Reaktionsharz-Matrix auf dem Substrat zu einem Duroplasten aushärtet.

Nachfolgend werden die wesentlichen Bestandteile, die für die Herstellung der Formkörper oder Laminate (Schichtkörper) besonders geeignet sind näher beschrieben.

Als Epoxidharze eignen sich eine Vielzahl von Polyepoxiden, die mindestens 2 1,2-Epoxigruppen pro Molekül haben. Das Epoxid-Äquivalent dieser Polyepoxide kann zwischen 150 und 50000, vorzugsweise zwischen 170 und 5000, variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere geeignete Polyphenole als Basis für die Polyglycidylether sind die bekannten Kondensationsprodukte aus Phenol und Formaldehyd oder Acetaldehyd vom Typ der Novolakharze.

Weitere Polyepoxide sind Polyglycidylester von Polycarbonsäuren, beispielsweise Umsetzungsprodukte von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten, wobei die flüssigen Epoxidharze vorzugsweise auf der Basis des Bisphenols A sind und ein hinreichend niedriges Molekulargewicht aufweisen. Die bei Raumtemperatur flüssigen Epoxidharze haben in der Regel ein Epoxid-Äquivalentgewicht von 150 bis etwa 480, besonders bevorzugt ist ein Epoxid-Äquivalentgewichtbereich von 182 bis 350.

Die bei Raumtemperatur festen Epoxidharze sind ebenfalls aus Polyphenolen und Epichlorhydrin erhältlich, besonders bevorzugt sind hier solche auf der Basis von Bisphenol A oder Bisphenol F mit einem Schmelzpunkt zwischen 45°C und 90°C, vorzugsweise zwischen 50°C und 80°C. Von den flüssigen Epoxidharzen unterscheiden sich letztere im Wesentlichen durch ihr höheres Molekulargewicht, wodurch diese bei Raumtemperatur fest werden. Erfindungsgemäß haben die festen Epoxidharze ein Epoxid-Äquivalentgewicht von ≥ 400, besonders bevorzugt ist ein Epoxid-Äquivalentgewicht von 450 bis etwa 900.

Als Flexibilisierungsmittel können flexibilisierend wirkende Epoxidharze wie die an sich bekannten Addukte aus Carboxyl-terminierten Butadien-Acrylnitrilcopolymeren (CTBN) und flüssigen Epoxidharzen auf der Basis des Diglycidylethers vom Bisphenol A eingesetzt werden. Konkrete Beispiele sind die Umsetzungsprodukte der Hycar CTBN 1300 X8, 1300 X13 oder 1300 X15 der Firma B.F. Goodrich mit flüssigen Epoxidharzen. Weiterhin lassen sich auch die Umsetzungsprodukte von aminoterminierten Polyalkylenglycolen (Jeffamine) mit einem Überschuß an flüssigen Polyepoxiden einsetzen. Derartige Umsetzungsprodukte sind beispielsweise in der WO 93/00381 offenbart. Grundsätzlich können auch Umsetzungsprodukte von Mercapto-funktionellen Prepolymeren oder flüssige Thiokol-Polymere mit einem Überschuß an Polyepoxiden als flexibilisierende Epoxidharze erfindungsgemäß eingesetzt werden. Ganz besonders bevorzugt sind jedoch die Umsetzungsprodukte von polymeren Fettsäuren, insbesondere der Dimerfettsäure mit Epichlorhydrin, Glycidol oder insbesondere Diglycidylether des Bisphenols A (DGBA). Weiterhin eignen sich die Copolymeren des Acrylnitrils mit Butadien und/oder Isopren und ggf. (Meth)acrylsäure mit einem Acrylnitrilgehalt zwischen 10 und 50 Gew.%, vorzugsweise zwischen 20 und 40 Gew.% und einem (Meth)acrylsäuregehalt zwischen 0,0 und 1 Gew.%, vorzugsweise zwischen 0,0 und 0,1 Gew.% als Flexibilisierungsmittel. Es können auch Mischungen der vorgenannten Flexibilisierungsmittel eingesetzt werden.

Ein weiterer wesentlicher Bestandteil der erfindungsgemäßen Bindemittel-Zusammensetzung sind Reaktiwerdünner. Reaktive Verdünner im Sinne dieser Erfindung sind Epoxigruppen enthaltende, niederviskose Substanzen (Glycidylether oder Glycidylester) mit aliphatischer oder aromatischer Struktur. Diese Reaktivverdünner dienen einerseits zur Viskositätserniedrigung des Bindemittel-Systems oberhalb des Erweichungspunktes, andererseits steuern sie den Vorgelierungsprozeß im Spritzguß. Typische Beispiele für erfindungsgemäß einzusetzende Reaktivverdünner sind Mono-, Di- oder Triglycidylether von C6- bis C14- Monoalkoholen oder Alkylphenolen sowie die Monoglycidylether des Cashewnuß-Schalenöls, Diglycidylether des Ethylenglycols, Diethylenglycols, Triethylenglycols, Tetraethylenglykols, Propylenglycols, Dipropylenglycols, Tripropylenglycols, Tetrapropylenglycols, 1,4-Butylenglycols, 1,5-Pentandiols, 1,6-Hexandiols, Cyclohexandimethanols, Triglycidylether des Trimethylolpropans sowie die Glycidylester von C6- bis C24- Carbonsäuren oder deren Mischungen.

Da die erfindungsgemäßen härtbaren Form- bzw. Schichtkörper einkomponentig ausgebildet sind und in der Hitze härtbar sein sollen, enthalten sie weiterhin einen latenten Härter und/oder zusätzlich einen oder mehrere Beschleuniger.

Als thermisch aktivierbare oder latente Härter für das Epoxydharz-Bindemittelsystem können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Heptamethylisobiguanidin und ganz besonders Cyanoguanidin (Dicyandiamid). Als Vertreter für geeignete Guanamin-Derivate seien alkylierte Benzoguanamin-Harze, Benzoguanamin-Harze oder Methoximethyl-ethoxymethylbenzoguanamin genannt. Für die einkomponentigen, hitzehärtenden Bindemittel ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1, 1-dimethylharnstoff (Fenuron) oder 3,4-Dichlorophenyl-N,N-dimethylharnstoff (Diuron). Prinzipiell können auch katalytisch wirksame tertiäre Acryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Bindemittelsystem, so daß hier keine brauchbare Lagerstabilität des einkomponentigen Systems erreicht wird. Weiterhin können diverse, vorzugsweise feste, Imidazolderivate als katalytisch wirksame Beschleuniger eingesetzt werden. Stellvertretend genannt seien 2-Ethyl-2-methylimidazol, N-Butylimidazol, Benzimidazol sowie N-C₁- bis C₁₂-Alkylimidazole oder N-Arylimidazole, Triazinderivate sowie Imidazol/Triazinverbindungen (z.B. C₁₁-Z-Azine, Fa. Ajinomoto). Es können auch Kombinationen aus Härter und Beschleuniger in Form von sog. beschleunigten Dicyandiamiden in feinvermahlener Form verwendet werden. Dadurch erübrigt sich gelegentlich der separate Zusatz von katalytisch wirksamen Beschleunigern zu dem Epoxid-Härtungssystem.

Für besonders reaktive Systeme können auch feinvermahlene pulverförmige Härtungsbeschleuniger auf der Basis von Addukten von Aminen an Epoxydharze verwendet werden, diese Addukte weisen tertiäre Aminogruppen und Epoxigruppen auf. Diese latenten, pulverförmigen Beschleuniger können in Kombination mit den vorgenannten latenten Härtern und/oder Beschleunigern eingesetzt werden.

Weiterhin können die erfindungsgemäßen Bindemittel feinteilige thermoplastische Polymerpulver enthalten. Diese thermoplastischen Polymerpulver können im Prinzip aus einer Vielzahl von feinteiligen Polymerpulvern ausgewählt werden, beispielhaft erwähnt seien Vinylacetat-Homopolymer, Vinylacetatcopolymer, Ethylenvinylacetat-Copolymer, Vinylchlorid-Homopolymer (PVC) oder Copolymere des Vinylchlorids mit Vinylacetat und/oder (Meth)acrylaten, Styrol-Homo- oder - Copolymere, (Meth)acrylat-Homo- oder -Copolymere oder Polyvinylbutyral. Besonders bevorzugte thermoplastische Polymere enthalten funktionelle Gruppen wie Carboxylgruppen, Carbonsäureanhydridgruppen oder Imidazolgruppen und haben eine Kern/Schale Struktur, wobei die Schale dieser Polymeren bei Raumtemperatur gegenüber Weichmachern oder Reaktivverdünnern ein geringes Quellungsverhalten aufweisen. Bei der Vorgelierungsreaktion während des Mischens und / oder Extrudierens quellen diese Kern/Schalepolymere jedoch sehr rasch auf und bewirken nach dem Abkühlen des Schichtkörpers sofort eine klebfreie Oberfläche der expandierbaren Bindemittelschicht. Derartige Kern/Schalepolymere sind beispielsweise in der EP 30 999 A1, EP 30590 A1, DE 2722752 A1 oder der US 5,290,857 beschrieben. Diese Polymerpulver sollen eine mittlere Korngröße unter 1 mm, vorzugsweise unter 350 *µ*m und ganz besonders bevorzugt unter 100 *µ*m aufweisen.

In der Regel enthalten die erfindungsgemäßen Bindemittel weiterhin an sich bekannte Füllstoffe wie zum Beispiel die diversen gemahlenen oder gefällten Kreiden, Ruß, Calcium-Magnesiumcarbonate, Schwerspat sowie silikatische Füllstoffe vom Typ des Aluminium-Magnesium-Calcium-Silicats, z. B. Wollastonit, Chlorit.

Erfindungsgemäßes Ziel ist es, die thermisch expandierbaren, hitzehärtbaren Zusammensetzungen zur Herstellung von spezifisch leichten Strukturen mit hoher Druckfestigkeit einzusetzen, deren Haftverhalten auch bei Feuchtigkeits- und Wärmealterung der ausgehärteten Strukturen über einen langen Zeitraum stabil bleibt. Daher enthalten sie zusätzlich zu den vorgenannten "normalen" Füllstoffen keine Glashohlkugeln als Leichtfüllstoffe, sondern vorzugsweise einen sogenannten 2- Komponentenfüllstoff aus Muskovit- Glimmer und Quarz mit niedrigem Schwermetallgehalt. Weiterhin können zusätzlich Kunststoffhohlkugeln auf der Basis von Phenolharzen, Epoxidharzen oder Polyestern, expandierte Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern, oder organische Leichtfüllstoffe natürlichen Ursprunges wie gemahlene Nußschaten, beispielsweise die Schalen von Cashewnüssen, Kokosnüssen oder Erdnußschalen sowie Korkmehl oder Kokspulver mit verwendet werden. Besonders bevorzugt werden dabei solche Füllstoffe, die in der ausgehärteten Schichtkörpermatrix eine mindestens ebenso hohe Druckfestigkeit des Schichtkörpers gewährleisten, wie sie mit den bekannten Glashohlkugeln erreicht werden.

In einer besonders bevorzugten Ausführungsform enthalten die Matrixmaterialien für die hitzehärtbaren, Schicht- oder Formkörper zusätzlich Kurzfasern auf der Basis von Aramidfasern, Kohlenstoff-Fasern, Metallfasern - z.B. aus Aluminium -, Glasfasern, Polyamidfasern, Polyethylenfasern oder Polyesterfasern, wobei diese Fasern vorzugsweise Pulpfasern oder Stapelfasern sind, die eine Faserlänge zwischen 0,5 und 6 mm haben und einen Durchmesser von 5 bis 20 *µ*m. Besonders bevorzugt sind hierbei Polyamidfasern vom Typ der Aramidfaser oder auch Glasfasern.

Als Treibmittel eignen sich zwar im Prinzip alle bekannten Treibmittel wie z. B. die "chemischen Treibmittel" die durch Zersetzung Gase freisetzten oder "physikalische Treibmittel", d.h. expandierende Hohlkugeln. Beispiele für die erstgenannten Treibmittel sind Azobisisobutyronitril, Azodicarbonamid, Di-Nitrosopentamethylentetramin, 4,4'-Oxybis(benzolsulfonsäurehydrazid), Diphenylsulfon-3,3'-disulfohydrazid, Benzol-1,3-disulfohydrazid, p-Toluolsulfonylsemicarbazid. Besonders bevorzugt werden jedoch die expandierbaren Kunststoffmikrohohlkugeln auf der Basis von Polyvinylidenchloridcopolymeren oder Acrylnitril/(Meth)acrylat-Copolymeren, diese sind z.B. unter den Namen "Dualite" bzw. "Expancel" von den Firmen Pierce & Stevens bzw. Casco Nobel im Handel erhältlich.

Weiterhin können die erfindungsgemäßen Klebstoffzusammensetzungen gängige weitere Hilfs- und Zusatzmittel wie z. B. Weichmacher, Reaktiwerdünner, Rheologie-Hilfsmittel, Netzmittel, Haftvermittler, insbesondere organofunktionelle Silane oder Titanate, Alterungsschutzmittel, Stabilisatoren und/oder Farbpigmente enthalten. Je nach Anforderungsprofil an den Form- oder Schichtkörper in Bezug auf seine Verarbeitungseigenschaften, die Flexibilität, die geforderte Versteifungswirkung sowie der klebende Verbund zu den Substraten können die Mengenverhältnisse der Einzelkomponenten in verhältnismäßig weiten Grenzen variieren.

Typische Bereiche für die wesentlichen Komponenten des Bindemittels sind:

| | | |
|---|---|---|
| (a) | thermoplastisches Polymerpulver | 0 bis 40 Gew.%, vorzugsweise 0 bis 15 Gew.%, |
| (b) | flüssiges Epoxidharz | 10 bis 60 Gew.%, vorzugsweise 30 bis 40 Gew.%, |
| (c) | festes Epoxidharz | 2 bis 60 Gew.%, |
| (d) | Reaktiwerdünner | 0 bis 15 Gew.%, vorzugsweise 1 bis 10 Gew.%, |
| (e) | Härter und Beschleuniger | 1,5 bis 5 Gew.%, |
| (f) | Treibmittel 0 bis | 3 Gew.%, |
| (g) | glimmerhaltiger Füllstoff | 5 bis 40 Gew.%, |
| (h) | weitere Füllstoffe | 5 bis 20 Gew.%, |
| (i) | Fasern | 0 bis 30 Gew.%, |
| (j) | Pigmente | 0 bis 1 Gew.%, |

wobei die Summe der Gesamtbestandteile 100 Gew.% ergibt.

Zur Herstellung der erfindungsgemäßen Bindemittel-Zusammensetzung werden das oder die Epoxydharze, das Flexibilisierungsmittel, der Reaktivverdünner und ggf. das thermoplastische Polymer gemeinsam mit den Füllstoffen, Fasern und Pigmenten in einem üblichen Mischaggregat wie Planetenmischer, Kneter oder ähnlichem homogenisiert. Anschließend werden die Treibmittel und Härter und Beschleuniger eingemischt, dabei soll die Materialtemperatur 110° C, vorzugsweise jedoch 60° C bis 90° C nicht übersteigen, insbesondere während und nach der Zugabe von Treibmitteln und Härter und / oder Beschleuniger.

Die so hergestellte Bindemitte-Zusammensetzung kann zwischengelagert werden oder zur Herstellung der Formkörper direkt in die Fördereinrichtung einer Spritzgußmaschine eingebracht werden. Zur Herstellung des expandierbaren Formteils wird dann zunächst in der Regel ein Träger in die Spritzgußform eingelegt. Dieser Träger kann aus Metall bestehen, beispielsweise aus verzinktem Stahlblech, Aluminium oder auch aus thermoplastischen Werkstoffen wie Polyamid (PA), Polyphenylensulfid (PPS), Polyphenylenether (PPE), Polyphenylensulfon (PPSU) oder Polyphenylenimid (PPI). Gegebenenfalls können diese Träger aus thermoplastischen Werkstoffen noch faserverstärkt sein, sie sollen sich durch niedrige Wasseraufnahme und Formstabilität bis 180°C auszeichnen.

Nach dem Schließen der Form wird dann das auf Temperaturen zwischen 60 °C und 110°C vorzugsweise 70°C bis 90°C erwärmte Bindemittel in die Form eingespritzt, danach erfolgt das Abkühlen des Formteils und die Entnahme des Formteils. Das Bindemittel ist bei den oben genannten Temperaturen niedrigviskos und kann daher leicht über Pumpen und Pressen bei niedrigen Drücken gefördert werden. Die nach dem Abkühlen erhaltene Formteile sind formstabil und bis mindestens 50°C nicht klebrig und benötigen zur Lagerung keine speziell angefertigte, die Form unterstützende Verpackung. Daher können die Formkörper auch im Sommer bei langen Transporten in südliche Länder ohne des Einsatz von Kühlwagen oder Kühlcontainern zum Endanwender transportiert werden. Beim Endanwender werden die Formteile dann je nach Anwendungsfall entweder in den zu versteifenden und verstärkenden Hohlraum eingebracht, ggf. können die Formteile bereits im Rohbau so an Karosserieteile angebracht werden, daß in den anschließenden Fügungsprozessen der Hohlraum erst durch Fügen weiterer Karosserieteile gebildet wird. Weiterhin können die erfindungsgemäßen Formteile auf flächige Blechteile wie z.B. weite Fugen und/oder Spalten von Karosserieteilen aufgebracht werden. Die Formteile sind in der Regel so dimensioniert, daß sie die Hohlräume oder Fugen und Spalten in der nicht expandierten Form nicht voll ausfüllen, so daß die weiteren Prozeßflüssigkeiten wie Wasch- und Reinigungsbäder, Phosphatier- und Konversionsbäder sowie der Elektrotauchlack die metallische Substratoberfläche voll benetzen kann. Gelegentlich sind in den Fertigungslinien sogenannte "Rohbauöfen" mit Temperaturen bis zu 140° C zum Vorgelieren von Kleb- und Dichtstoffen vorgesehen, in diesem Fall sollen die erfindungsgemäßen Formteile noch nicht im Rohbauofen expandieren und aushärten. Erst in den anschließenden Öfen zum Aushärten des Elelktrotauchlackes erfolgt bei Temperaturen zwischen 110°C und 200°C, vorzugsweise zwischen 140°C und 180°C die Expansion des Formkörpers um 50 bis 100%, gleichzeitig härtet die Reaktionsharz-Matrix des Bindemittelssystems zu einem Duroplasten aus, der die Hohlräume dann so ausfüllt, daß er seine Versteifung- und Verstärkungswirkung ausüben kann.

Im ausgehärteten und aufgeschäumten Zustand hat die Formkörpermatrix eine Druckfestigkeit von 6 bis 30 MPa und einen Druckmodul von 300 bis 1500 MPa und bewirkt dadurch eine hohe Verstärkungs- und Versteifungsleistung bei niedrigem spezifischen Gewicht.

Bevorzugte Verwendung der expandierbaren Formkörper sind Versteifungen und Verstärkungen von Blechteilen und/oder metallischen Hohlstrukturen, insbesondere Karosserierahmen, Karosserieträger und die A-, B-, und/oder C-Säulen oder Hohlräume in Türen im Automobilbau.

Zur Herstellung der Schichtkörper wird die Bindemittel-Zusammensetzung mit Hilfe eines Extruders oder Kalanders auf ein Verstärkungsmittel in Form einer Folie oder eines textilen Flächengebildes aufgetragen.

Als Folien eignen sich dabei Aluminiumfolien, Stahlfolien, Messingfolien oder Kupferfolien, die ggf. noch - zumindest einseitig - kunststoffbeschichtet sein können. Weiterhin eignen sich Kunststoff-Folien aus Polyester, Polyamid, Polypropylen oder Polyimid. Als textiles, faserhaltiges Flächengebilde eignen sich Vliese, Gewebe oder Gewirke aus Aramidfasern, Kohlenstoff-Fasern, Glasfasern, Polyamidfasern, Polyethylenfasern, Polypropylenfasern oder Polyesterfasern.

Die so hergestellten elastischen, flexiblen Folien lassen sich durch weitere Formgebungsverfahren, wie Stanzen oder Schneiden zu den reaktiven Versteifungs- oder Verstärkungsschichtkörper weiterverarbeiten. Ggf. muß die Bindemittelseite noch mit einer Schutzfolie bedeckt werden, so daß sich diese Formteile ohne großen Verpackungsaufwand problemlos lagern und transportieren klassen.

Die Hauptanwendung der erfindungsgemäßen Schichtkörper ist die Versteifung und die Verstärkung von flächigen Bauteilen, insbesondere von Karosseriebauteilen wie Karosserierahmen, Türen, Kofferraumdeckel, Motorhauben und / oder Dachteilen im Automobilbau.
In den nachfolgenden Ausführungsbeispielen, soll die Erfindung näher erläutert werden, wobei die Auswahl der Beispiele keine Beschränkung des Umfanges des Erfindungsgegenstandes darstellen soll, sie sollen lediglich in modellhafter Weise einzelne Ausführungsformen und vorteilhafte Wirkungen der Erfindung darstellen. Alle in den nachfolgenden Beispielen gegebenen Mengenangaben sind Gewichtsteile bzw. Gewichtsprozent, falls nicht anders angegeben.

### Beispiele:

Die in der nachfolgenden Tabelle aufgeführten Bindemittel - Zusammensetzungen wurden in einem evakuierbaren Planetenmischer bis zur Homogenität gemischt, dabei wurde sichergestellt, daß die Temperatur der Masse 70 ° C nicht überstieg.

| | **Beispiel 1** | **Beispiel 2** | **Beispiel 3** | **Beispiel 4.** | **Beispiel 5** |
|---|---|---|---|---|---|
| Epoxidharz 1¹⁾ | 38,00 | | | 38,00 | 38,00 |
| Epoxidharz 2²⁾ | | 38,00 | 38,00 | | |
| Epoxidharz 3³⁾ | 5,00 | | | 5,00 | 5,00 |
| Epoxidharz 4⁴⁾ | | 7,00 | 7,00 | | |
| Modifiziertes Epoxidharz 1 ⁵⁾ | 15,00 | | | 15,00 | 15,00 |
| Modifiziertes Epoxidharz 2 ⁶⁾ | | 5,00 | 5,00 | | |
| Mikroglashohlkugeln ⁷⁾ | 25,20 | | | 26,80 | 25,20 |
| Dicyandiamid | 3,00 | 3,00 | 3,00 | 3,00 | 3,00 |
| Beschleuniger ⁸⁾ | 1,80 | 1,80 | 1,80 | 1,80 | 1,80 |
| Treibmittel ⁹⁾ | 1,20 | 2,00 | 2,00 | 1,60 | 1,60 |
| Thixotropiermittel ¹⁰⁾ | 3,00 | 3,00 | 3,00 | 1,00 | 1,00 |
| Pigment (Rußpaste) | 0,40 | 0,40 | 0,40 | 0,40 | 0,40 |
| Füllstoff 1 ¹¹⁾ | 7,40 | | 5,00 | 7,40 | 8,60 |
| Füllstoff 2¹²⁾ | | 39,80 | 34,40 | | |
| Silan ¹³⁾ | | | 0,10 | | 0,10 |
| Titanat ¹⁴⁾ | | | 0,30 | | 0,30 |
| **Summe** | **100,00** | **100,00** | **100,00** | **100,00** | **100,00** |
| | | | | | |
| | | | | | |
| Dichte (g/cm³), ungehärtet | 0,84 | 1,65 | 1,56 | 0,87 | 0,87 |
| Dichte (g/cm³) gehärtet | 0,53 | 0,64 | 0,59 | 0,47 | 0,47 |
| Treibgrad (%) | 56% | 156 | 163 | 85% | 85% |
| Druckfestigkeit 23°C (MPa) | 32,4 | 25,6 | 20,9 | 24,3 | 23,7 |
| Zugscherfestigkeit H0 (MPa) | 3,3 | 3,14 | 2,67 | 3,73 | 3,97 |
| Zugscherfestigkeit H7 (MPa) | 1,9 | 1,93 | 2,57 | 2,19 | 2,88 |
| Zugscherfestigkeit H21 (MPa) | 1,87 | 1,92 | 2,43 | 2,26 | 2,64 |
| Anmerkungen: 1) festes Epoxidharz, Molekulargewicht etwa 880, Schmelzbereich 50 bis 62 °C, Epoxidäquivalent 475, 2) festes Epoxidharz, Schmelzviskosität bei 150°C etwa 675 mPa.s, Erweichungsbereich 75 bis 85 °C, Epoxidäquivalent etwa 510, 3) flüssiges Epoxidharz auf Basis DGBA, Epoxidäquivalent 250 4) flüssiges /halbfestes Epoxidharz auf Basis DGBA, Epoxidäquivalent 240 5) Epoxidharz auf Basis eines DGBA / Dimerfettsäureadduktes, Epoxidäquivalent etwa 550 6) Monoglycidylether eines C12- /C14-Alkohols, Epoxidäquivalent 314 7) Scotchlite VS 5500, Druckfestigkeit ca 38 MPa, Fa. 3M 8) feingemahlener Beschleuniger (Aminoaddukt an Epoxidharz mit Epoxy- und tertiären Aminogruppen) 9) Treibmittel (Kunststoffhohlkugeln "Expancel DU 140", Fa. Pierce & Stevens) 10)auf Basis Polyolefin- Pulpfasern 11)Kreide, gefällt 12)2- Komponentenfüllstoff aus Muskovit- Glimmer und Quarz 13)3₋Glycidyloxypropyl-trimethoxysilan 14)Tertraoctyltitanat | | | | | |

Zur Simulierung des Spritzgusses wurden die Zusammensetzungen jeweils 5 min. bei 110 °C vorgeliert, dies entspricht der Vorgelierung im Spritzgußwerkzeug der Spritzgußmaschine. Nach dieser Vorgelierung waren die Prüfkörper formstabil und hatten eine klebfreie Oberfläche. Zur Bestimmung des Treibgrades, der Dichte im gehärteten Zustand, der Druckfestigkeit des Formkörpers und der Scherfestigkeit wurden die Formlinge 38 min. bei 150°C eingebrannt.

Die vorstehend aufgeführten Beispiele 2 und 3 sind erfindungsgemäß, während die Beispiele 1, 4 und 5 Vergleichsbeispiele sind. Die erfindungsgemäßen Beispiele weisen zwar wegen der fehlenden Glashohlkugeln im nicht getriebenen und nicht ausgehärteten Zustand eine höhere Dichte auf, dies wird jedoch durch den wesentlich höheren Treibgrad während des Aushärtungsprozesses mehr als überkompensiert, ohne daß es zu einer signifikanten Verringerung der Druckfestigkeit kommt. Es wird mit den erfindungsgemäßen Beispielen eine gegenüber dem Stand der Technik vergleichbare Druckfestigkeit der geschäumten Formkörper erreicht. Bei Zusatz von Silanen und Titanaten (Beispiel 3) wird die Zugscherfestigkeit auch nach 7-tägiger (H 7) als auch nach 3-wöchiger (H 21) Feuchtigkeits-/Wärmelagerung weitgehend aufrechterhalten, während bei den Zusammensetzungen gemäß Stand der Technik insbesondere bei der längeren Feuchtigkeits-/Wärmelagerung ein signifikanter Abfall der Zugscherfestigkeit gegenüber dem Ausgangswert (H 0) beobachtet wird. Weiterhin weisen die erfindungsgemäßen Zusammensetzungen eine geringere Scherempfindlichkeit auf, so daß keine aufwendigen Vorsichtsmaßnahmen bei Herstellung der Mischungen und bei deren Förderung in Pumpen und Extrudern vorgesehen werden müssen.

## Patentansprüche

1. Expandierbare, thermisch härtbare Zusammensetzung enthaltend
a) mindestens ein flüssiges Epoxidharz,
b) mindestens ein festes Epoxidharz,
c) mindestens ein Treibmittel,
d) mindestens einen Härter,
e) mindestens einen glimmerhaltigen Füllstoff,
wobei die Zusammensetzung keine Glashohlkugeln enthält.

2. Expandierbare, thermisch härtbaren Zusammensetzung nach Anspruch 1,
**dadurch gekennzeichnet, daß** sie zusätzlich ein Flexibilisierungsmittel enthält.

3. Expandierbare, thermisch härtbare Zusammensetzung nach Anspruch 1 oder 2, **dadurch gekennzeichnet, daß** sie zusätzlich einen Reaktionsverdünner enthält.

4. Expandierbare, thermische härtbare Zusammensetzung nach Anspruch 1 bis 3, **dadurch gekennzeichnet, daß** mindestens ein Epoxidharz ein Glycidylether eines Polyphenols ist.

5. Expandierbare, thermisch härtbare Zusammensetzung nach Anspruch 1 bis 4, **dadurch gekennzeichnet, daß** das Flexibilisierungsmittel ausgewählt wird aus kautschukmodifizierten Epoxidharzen, polyurethanmodifizierten Epoxidharzen, Addukten aus aminoterminierten Polyoxyalkylenen und Polyepoxiden, Addukten aus Dimerfettsäure und Bisphenol-A-diglycidylethern, Addukte von Polyetherpolyolen an Epoxidharze, Polysulfid- oder Polymercaptan-modifizierten Epoxidharzen, Copolymeren des Acrylnitrils mit Butadien und / oder Isopren und ggf. (Meth)acrylsäure mit einem Acrylnitrilgehalt zwischen 10 und 50 Gew.%, vorzugsweise zwischen 20 und 40 Gew.% und einem (Meth)acrylsäuregehalt zwischen 0,0 und 1 Gew.%, vorzugsweise zwischen 0,0 und 0,1Gew%. oder Mischungen der vorgenannten Flexibilisierungsmittel.

6. Expandierbare, thermisch härtbare Zusammensetzung nach Anspruch 1 bis 5, **dadurch gekennzeichnet, daß** der Reaktivverdünner ausgewählt wird aus Monoglycidylethern von C6- bis C14- Monoalkoholen, des Cashewnuß-Schalenöls, Alkylphenolen, Di- oder Triglycidylethern von Ethylenglykol, Diethylenglycol, Triethylenglycol, Tetraethylenglycol, Propylenglycol, Dipropylenglycol, Tripropylenglycol, Tetrapropylenglycol, 1,4-Butylenglycol, 1,5-Pentandiol, 1,6-Hexandiol, Cyclohexandimethanol, Trimethylolpropan, Glycidylester von C6- bis C24- Carbonsäuren oder deren Mischungen.

7. Expandierbare, thermisch härtbare Zusammensetzung nach mindestens einem der vorhergehenden Ansprüche, **dadurch gekennzeichnet, daß** als Härter Dicyandiamid in einer Menge bis zu 5 Gew.% bezogen auf die Gesamtzusammensetzung und gegebenenfalls ein oder mehrere Beschleuniger verwendet wird.

8. Expandierbare, thermisch härtbare Zusammensetzung nach mindestens einem der vorhergehenden Ansprüche, **dadurch gekennzeichnet, daß** sie zusätzlich thermoplastische Polymerpulver enthält, ausgewählt aus Vinylacetat- Homo- oder Copolymeren, Ethylenvinylacetat-Copolymeren, Vinylchlorid- Homo- oder Copolymeren, Styrol-Homo- oder Copolymeren, (Meth)acrylat- Homo- oder Copolymeren oder Polyvinylbutyral oder eine Mischung aus zwei oder mehreren dieser Polymeren und die eine mittlere Korngröße von unter 1 mm, vorzugsweise unter 350 *µ*m, ganz besonders bevorzugt unter 100 *µ*m hat.

9. Expandierbare, thermisch härtbare Zusammensetzung nach mindestens einem der vorhergehenden Ansprüche, **dadurch gekennzeichnet, daß** der glimmerhaltige Füllstoff Muskovit-Glimmer und Quarz enthält.

10. Expandierbare, thermisch härtbare Zusammensetzung nach mindestens einem der vorhergehenden Ansprüche, **dadurch gekennzeichnet, daß** sie zusätzlich weitere Füllstoffe enthält, ausgewählt aus Fillite (Flugasche), Kunststoffhohlkugeln auf der Basis von Phenolharzen, Epoxidharzen, Polyestern oder Microhohlkugeln mit Wandmaterial aus (Meth)acrylsäureester-Copolymeren, Polystyrol, Styrol(meth)acrylat-Copolymeren sowie insbesondere aus Polyvinylidenchlorid sowie Copolymeren des Vinylidenchlorids mit Acrylnitril und/oder (Meth)acrylsäureestern oder organische Leichtfüllstoffe nativen Ursprungs wie gemahlene Nußschalen, Korkmehl oder Kokspulver oder Mischungen der vorgenannte Füllstoffe.

11. Expandierbare, thermisch härtbare Zusammensetzung nach mindestens einem der vorhergehenden Ansprüche, **dadurch gekennzeichnet, daß** das Treibmittel (c) expandierbare Mikrohohlkugeln sind.

12. Expandierbare, thermisch härtbare Zusammensetzung nach mindestens einem der vorhergehenden Ansprüche, **dadurch gekennzeichnet, daß** sie Fasern auf der Basis von Aramidfasern, Kohlenstoff-Fasern, Metallfasern, Glasfasern, Polyamidfasern, Polyethylenfasern oder Polyesterfasern enthält.

13. Verfahren zum Versteifen und/oder Verstärken von Karosseriebauteilen, **gekennzeichnet durch** die folgenden wesentlichen Verfahrensschritte
a) Mischen der Zusammensetzungs- Bestandteile nach mindestens einem der Ansprüche 1 bis 12 bei Temperaturen unterhalb von 110° C,
b) Extrusion der Zusammensetzung bei Temperaturen von 60°C bis 110°C, vorzugsweise 70°C bis 90°C, ggf. auf ein textiles Flächengebilde oder Metallband oder einen Träger,
c) Abkühlen des so geformten Schichtkörpers (Laminats),
d) Aufbringen des Laminates auf das metallische Substrat gegebenenfalls unter Erwärmen auf den Erweichungsbereich des Schichtkörpers
e) Erwärmen des Substrats auf Temperaturen zwischen 110°C und 200°C, vorzugsweise zwischen 130°C und 180°C, wobei die Reaktionsharz-Matrix auf dem Substrat zu einem Duroplasten aushärtet.

14. Extrudiertes Laminat nach Anspruch 13, **dadurch gekennzeichnet, daß** er bei Raumtemperatur nach Stufe (c) auf mindestens einer Seite klebrig ist und bei Temperaturen bis 50° C ohne Dimensions- und Formänderung stapelbar ist, wobei die klebrige Seite mit einer Schutzfolie versehen ist.

15. Verwendung der Laminate nach einem der vorhergehenden Ansprüche 13 (a) bis (c) oder 14 zur Versteifung und Verstärkung von Bauteilen, insbesondere von Karosseriebauteilen wie Karosserierahmen, Türen, Kofferraumdeckel, Motorhauben und / oder Dachteilen im Automobilbau.

16. Fahrzeug oder metallisches Bauteil, **dadurch gekennzeichnet, daß** es nach einem Verfahren gemäß Anspruch 13 versteift oder verstärkt wurde.

17. Verfahren zum Versteifen und/oder Verstärken von Karosseriebauteilen, **gekennzeichnet durch** die folgenden wesentlichen Verfahrensschritte
a) Mischen der Zusammensetzungs - Bestandteile nach mindestens einem der Ansprüche 1 bis 12 bei Temperaturen unterhalb von 110° C, vorzugsweise unterhalb von 50° C,
b) Spritzgießen der Zusammensetzung bei Temperaturen von 60°C bis 110°C, vorzugsweise 70°C bis 90°C, ggf. auf einen Träger,
c) Abkühlen des so gebildeten Formkörpers,
d) Einbringen des Formkörpers in den zu versteifenden Hohlraum gegebenenfalls unter Erwärmen auf den Erweichungsbereich des Formkörpers,
e) Erwärmen auf Temperaturen zwischen 110°C und 200°C, vorzugsweise zwischen 130°C und 180°C, wobei das Volumen des Formkörpers um 50 bis 250 % expandiert und die Reaktionsharz-Matrix zu einem Duroplasten aushärtet.

18. Spritzgegossener Formkörper nach Anspruch 17, **dadurch gekennzeichnet, daß** er bei Raumtemperatur nach Stufe (c) nicht klebrig ist.

19. Spritzgegossener Formkörper nach Anspruch 17a) bis c) oder 18, **dadurch gekennzeichnet, daß** der Träger aus verzinktem Stahlblech, Aluminium oder aus thermoplastischen Werkstoffen wie Polyamid (PA), Polyphenylensulfid (PPS), Polyphenylenether (PPE), Polyphenylensulfon (PPSU) oder Polyphenylenimid (PPI) ist.

20. Spritzgegossener Formkörper nach Anspruch 19, **dadurch gekennzeichnet, daß** der thermoplastische Werkstoff faserverstärkt ist.

21. Verwendung der Formkörper nach einem der vorhergehenden Ansprüche 17 (a) bis (c) oder 18 bis 20 zur Versteifung und Verstärkung von metallischen Hohlstrukturen, insbesondere von Karosseriehohtteiten wie Karosserierahmen, -trägern und -säulen oder Türen im Automobilbau.

## Claims

1. Expandable, thermally curable composition containing
(a) at least one liquid epoxy resin;
(b) at least one solid epoxy resin;
(c) at least one propellant;
(d) at least one curing agent;
(e) at least one mica-containing filler, which contains muscovite-mica and quartz
wherein the composition contains no hollow glass beads.

2. Expandable, thermally curable composition according to claim 1, **characterised in that** it additionally contains a flexibilising agent.

3. Expandable, thermally curable composition according to claim 1 or 2, **characterised in that** it additionally contains a reactive thinner.

4. Expandable, thermally curable composition according to any of claims 1 to 3, **characterised in that** it contains at least one epoxy resin, a glycidyl ether of a polyphenol.

5. Expandable, thermally curable composition according to any of claims 1 to 4, **characterised in that** the flexibilising agent is selected from rubber-modified epoxy resins, polyurethane-modified epoxy resins, adducts of amino-terminated polyoxyalkylenes and polyepoxides, adducts of dimeric fatty acid and bisphenol-A-diglycidyl ethers, adducts of polyether polyols and epoxy resins, polysulfide- or polymercaptan-modified epoxy resins, copolymers of acrylonitrile with butadiene and/or isoprene and optionally (meth)acrylic acid with an acrylonitrile content of between 10 and 50 wt%, preferably between 20 and 40 wt%, and a (meth)acrylic acid content of between 0.0 and 1 wt%, preferably between 0.0 and 0.1 wt%, or mixtures of the afore-mentioned flexibilising agents.

6. Expandable, thermally curable composition according to any of claims 1 to 5, **characterised in that** the reactive thinner is selected from monoglycidyl ethers of C6 to C14 monoalcohols, cashew nut shell oil, alkyl phenols, di- or triglycidyl ethers of ethylene glycol, diethylene glycol, triethylene glycol, tetraethylene glycol, propylene glycol, dipropylene glycol, tripropylene glycol, tetrapropylene glycol, 1,4-butylene glycol, 1,5-pentane diol, 1,6-hexane diol, cyclohexanedimethanol, trimethylol propane, glycidyl esters of C6 to C24 carboxylic acids or their mixtures.

7. Expandable, thermally curable composition according to at least one of the preceding claims, **characterised in that** dicyandiamide is used as curing agent in an amount of up to 5 wt% based on the overall composition, optionally together with one or more accelerators.

8. Expandable, thermally curable composition according to at least one of the preceding claims, **characterised in that** it additionally contains thermoplastic polymer powders selected from vinyl acetate homo- or copolymers, ethylene vinyl acetate copolymers, vinyl chloride homo- or copolymers, styrene homo- or copolymers, (meth)acrylate homo- or copolymers, or polyvinyl butyral, or a mixture of two or more of said polymers and which has a mean particle size of less than 1 mm, preferably less than 350 µm, most particularly preferably less than 100 µm.

9. Expandable, thermally curable composition according to at least one of the preceding claims, **characterised in that** it additionally contains further fillers selected from fillite (fly ash), hollow plastic beads based on phenol resins, epoxy resins, polyesters, or hollow microbeads with wall material of (meth)acrylate copolymers, polystyrene, styrene(meth)acrylate copolymers, and in particular of polyvinylidene chloride, as well as copolymers of vinylidene chloride with acrylonitrile and/or (meth)acrylonitrile or organic lightweight fillers of native origin such as ground nut shells, cork powder or coke dust or mixtures of the aforementioned fillers.

10. Expandable, thermally curable composition according to at least one of the preceding claims, **characterised in that** expandable hollow microbeads form the propellant (c).

11. Expandable, thermally curable composition according to at least one of the preceding claims, **characterised in that** it contains fibres based on aramid fibres, carbon fibres, metal fibres, glass fibres, polyamide fibres, polyethylene fibres or polyester fibres.

12. Expandable, thermally curable composition according to at least one of Claims 1 to 8, containing
| | |
|---|---|
| (a) thermoplastic polymer powder | 0 to 40 wt%, preferably 0 to 15 wt%, |
| (b) liquid epoxy resin | 10 to 60 wt%, preferably 30 to 40 wt%, |
| (c) solid epoxy resin | 2 to 60 wt%, |
| (d) reactive thinner | 0 to 15 wt%, preferably 1 to 10 wt%, |
| (e) curing agent and accelerator | 1.5 to 5 wt%, |
| (f) propellant | 0 to 3 wt%, |
| (g) mica-containing filler | 5 to 40 wt%, |
| (h) other fillers | 5 to 20 wt%, |
| (i) fibres | 0 to 30 wt%, |
| (j) pigments | 0 to 1 wt%, |
in which the sum of the overall components amounts to 100 wt%.

13. Process for stiffening and/or reinforcing of car body components, **characterised by** the following main process steps:
a) mixing of the composition ingredients according to at least one of claims 1 to 12 at temperatures of less than 110°C;
b) extrusion of the composition at temperatures of 60°C to 110°C, preferably 70°C to 90°C, optionally onto a flat-shaped woven article or metal strip or support.
c) cooling of the laminate so formed;
d) application of the laminate to the metal substrate optionally with heating to the softening range of the laminate;
e) heating of the substrate to temperatures of between 110°C and 200°C, preferably between 130°C and 180°C, during which the reaction resin matrix cures to a thermoset on the substrate.

14. Extruded laminate according to claim 13, **characterised in that** it is tacky at room temperature after stage (c) on at least one side and is stackable at temperatures of up to 50°C without change in size and form, wherein the tacky side is provided with a protective film.

15. Use of the laminate according to any one of the preceding claims 13 (a) to (c) or 14 for the stiffening and reinforcing of components, in particular of car body components such as body frames, doors, boot lids, engine bonnets and/or roof parts in the automotive industry.

16. Vehicle or metallic component, **characterised in that** it has been stiffened or reinforced by a process according to claim 15.

17. Process for the stiffening and/or reinforcing of car body components, **characterised by** the following main process steps:
a) mixing of the composition ingredients according to at least one of claims 1 to 12 at temperatures of less than 110°C, preferably less than 50°C;
b) injection moulding of the composition at temperatures of 60°C to 110°C, preferably 70°C to 90°C, optionally onto a support;
c) cooling of the moulding so formed;
d) insertion of the moulding into the cavity to be stiffened, optionally with heating to the softening range of the moulding;
e) heating to temperatures of between 110°C and 200°C, preferably between 130°C and 180°C, during which the volume of the moulding expands by 50 to 250% and the reaction resin matrix cures to a thermoset.

18. Injection-moulded moulding according to claim 17, **characterised in that** it is not tacky at room temperature after stage (c).

19. Injection-moulded moulding according to claims 17a) to c) or 18, **characterised in that** the support is of zinc-plated steel plate, aluminum or thermoplastic materials such as polyamide (PA), polyphenylene sulfide (PPS), polyphenylene ether (PPE), polyphenylene sulfone (PPSU), or polyphenylene imide (PPI).

20. Injection-moulded moulding according to claim 19, **characterised in that** the thermoplastic material is fibre-reinforced.

21. Use of the mouldings according to any one of the preceding claims 17(a) to (c) or 18 to 20 for the stiffening and reinforcement of hollow metal structures, in particular of hollow car parts such as body frames, supports and posts or doors in automotive industry.

## Revendications

1. Composition expansible, thermodurcissable, contenant
a) au moins une résine époxyde liquide,
b) au moins une résine époxyde solide,
c) au moins un agent gonflant,
d) au moins un durcisseur,
e) au moins une charge contenant du mica, qui contient du mica de muscovite et du quartz
la composition ne contenant pas de billes creuses en verre.

2. Composition expansible, thermodurcissable selon la revendication 1, **caractérisée en ce qu'**elle contient en outre un agent de flexibilisation.

3. Composition expansible, thermodurcissable selon la revendication 1 ou 2, **caractérisée en ce qu'**elle contient en outre un diluant réactif.

4. Composition expansible, thermodurcissable selon les revendications 1 à 3, **caractérisée en ce qu'**au moins une résine époxyde est un glycidyléther d'un polyphénol.

5. Composition expansible, thermodurcissable selon les revendications 1 à 4, **caractérisée en ce que** l'agent de flexibilisation est choisi parmi les résines époxyde modifiées par un caoutchouc, les résines époxyde modifiées par un polyuréthane, les produits d'addition de polyoxyalkylènes terminés par amino et de polyépoxydes, les produits d'addition d'acides gras dimères et de bisphénol-A-diglycidyléthers, les produits d'addition de polyétherpolyols sur des résines époxyde, les résines époxyde modifiées par un polysulfure ou un polymercaptan, les copolymères de l'acrylonitrile avec du butadiène et/ou de l'isoprène et le cas échéant de l'acide (méth)acrylique présentant une teneur en acrylonitrile entre 10 et 50% en poids, de préférence entre 20 et 40% en poids et une teneur en acide (méth)acrylique entre 0,0 et 1 % en poids, de préférence entre 0,0 et 0,1% en poids ou des mélanges des agents de flexibilisation susmentionnés.

6. Composition expansible, thermodurcissable selon les revendication 1 à 5, **caractérisée en ce que** le diluant réactif est choisi parmi les monoglycidyléthers de monoalcools en C₆ à C₁₄ de l'huile de coquille de noix de cajou, d'alkylphénols, les diglycidyléthers ou les triglycidyléthers de l'éthylèneglycol, du diéthylèneglycol, du triéthylèneglycol, du tétraéthylèneglycol, du propylèneglycol, du dipropylèneglycol, du tripropylèneglycol, du tétrapropylèneglycol, du 1,4-butylèneglycol, du 1,5-pentanediol, du 1,6-hexanediol, du cyclohexanediméthanol, du triméthylolpropane, les esters glycidyliques d'acides carboxyliques en C₆ à C₂₄ ou leurs mélanges.

7. Composition expansible, thermodurcissable selon au moins l'une quelconque des revendications précédentes, **caractérisée en ce qu'**on utilise comme durcisseur du dicyanodiamide en une quantité jusqu'à 5% en poids par rapport à la composition totale et le cas échéant un ou plusieurs accélérateurs.

8. Composition expansible, thermodurcissable selon au moins l'une quelconque des revendications précédentes, **caractérisée en ce qu'**elle contient en outre une poudre polymère thermoplastique, choisie parmi les homopolymères ou les copolymères d'acétate de vinyle, les copolymères d'éthylène-acétate de vinyle, les homopolymères ou les copolymères de chlorure de vinyle, les homopolymères ou les copolymères de styrène, les homopolymères ou les copolymères de (méth)acrylate ou le polyvinylbutyral ou un mélange de deux de ces polymères ou plus et qui présente une grosseur de particule moyenne inférieure à 1 mm, de préférence inférieure à 350 µm, de manière tout particulièrement préférée inférieure à 100 µm.

9. Composition expansible, thermodurcissable selon au moins l'une quelconque des revendications précédentes, **caractérisée en ce qu'**elle contient en outre d'autres charges, choisies parmi les fillites (cendres volantes), les billes creuses en matériau synthétique à base de résines phénoliques, de résines époxyde, les polyesters ou les microbilles creuses avec un matériau formant la paroi en copolymères d'esters de l'acide (méth)acrylique, en polystyrène, en copolymères de styrène-(méth)acrylate ainsi qu'en particulier en poly(chlorure de vinylidène) ainsi qu'en copolymères du chlorure de vinylidène avec de l'acrylonitrile et/ou des esters de l'acide (méth)acrylique ou les charges organiques légères d'origine naturelle telles que des coquilles de noix broyées, de la farine de liège ou de la poudre de coke ou des mélanges des charges susmentionnées.

10. Composition expansible, thermodurcissable selon au moins l'une quelconque des revendications précédentes, **caractérisée en ce que** l'agent gonflant (c) est formé par des microbilles creuses expansibles.

11. Composition expansible, thermodurcissable selon au moins l'une quelconque des revendications précédentes, **caractérisée en ce qu'**elle contient des fibres à base de fibres d'aramide, de fibres de carbone, de fibres métalliques, de fibres de verre, de fibres de polyamide, de fibres de polyéthylène ou de fibres de polyester.

12. Composition expansible, thermodurcissable selon au moins l'une quelconque des revendications 1 à 8, contenant
| | | |
|---|---|---|
| (a) | une poudre polymère thermoplastique | 0 à 40% en poids de préférence 0 à 15% en poids, |
| (b) | une résine époxyde liquide | 10 à 60% en poids, de préférence 30 à 40% en poids, |
| (c) | une résine époxyde solide | 2 à 60% en poids, |
| (d) | un diluant réactif | 0 à 15% en poids, de préférence 1 à 10% en poids, |
| (e) | un durcisseur et un accélérateur | 1,5 à 5% en poids, |
| (f) | un agent gonflant | 0 à 3% en poids, |
| (g) | une charge contenant du mica | 5 à 40% en poids, |
| (h) | d'autres charges | 5 à 20% en poids, |
| (i) | des fibres | 0 à 30% en poids, |
| (j) | des pigments, | 0 à 1% en poids, |
la somme de tous les constituants valant 100% en poids.

13. Procédé pour rigidifier et/ou renforcer des pièces de carrosserie, **caractérisé par** les étapes de procédé essentielles suivantes
a) le mélange des constituants de la composition selon au moins l'une quelconque des revendications 1 à 12 à des températures inférieures à 110°C,
b) l'extrusion de la composition à des températures de 60°C à 110°C, de préférence de 70°C à 90°C, le cas échéant sur une structure plane textile ou une bande métallique ou un support,
c) le refroidissement du corps à couches ainsi formé (stratifié),
d) l'application du stratifié sur le substrat métallique, le cas échéant en chauffant à la plage de ramollissement du corps à couches
e) le chauffage du substrat à des températures entre 110°C et 200°C, de préférence entre 130°C et 180°C, la matrice de la résine de réaction durcissant sur le substrat en une matière plastique thermodurcie.

14. Stratifié extrudé selon la revendication 13, **caractérisé en ce qu'**il est adhésif à température ambiante après l'étape c) sur au moins une face et peut être empilé à des températures jusqu'à 50°C sans modification de la dimension ni de la forme, la face adhésive étant pourvue d'une feuille de protection.

15. Utilisation des stratifiés selon l'une quelconque des revendications précédentes 13 a) à c) ou 14 pour rigidifier et renforcer des pièces, en particulier des pièces de carrosserie, telles que les cadres de carrosserie, les portes, les couvercles de coffre, les capots de moteur et/ou les parties de toit dans la construction automobile.

16. Voiture ou pièce métallique, **caractérisée en ce qu'**elle a été rigidifiée ou renforcée selon un procédé selon la revendication 13.

17. Procédé pour rigidifier et/ou renforcer des pièces de carrosserie, **caractérisé par** les étapes de procédé essentielles suivantes
a) le mélange des constituants de la composition selon au moins l'une quelconque des revendications 1 à 12 à des températures inférieures à 110°C, de préférence inférieures à 50°C
b) le moulage par injection de la composition à des températures de 60°C à 110°C, de préférence de 70°C à 90°C, le cas échéant sur un support,
c) le refroidissement du corps façonné ainsi formé,
d) l'introduction du corps façonné dans l'espace creux à rigidifier, le cas échéant en chauffant à la plage de ramollissement du corps façonné,
e) le chauffage à des températures entre 110°C et 200°C, de préférence entre 130°C et 180°C, le volume du corps façonné subissant une expansion de 50 à 250% et la matrice de la résine de réaction durcissant en une matière plastique thermodurcie.

18. Corps façonné moulé par injection selon la revendication 17, **caractérisé en ce qu'**il n'est pas adhésif à température ambiante après l'étape c).

19. Corps façonné moulé par injection selon la revendication 17 a) à c) ou 18, **caractérisé en ce que** le support est en tôle d'acier zinguée, en aluminium ou en matériaux thermoplastiques, tels que le polyamide (PA), le poly(sulfure de phénylène)(PPS), le polyphénylénéther (PPE), le polyphénylènesulfone (PPSU) ou le polyphénylénimide (PPI).

20. Corps façonné moulé par injection selon la revendication 19, **caractérisé en ce que** le matériau thermoplastique est renforcé par des fibres.

21. Utilisation des corps façonnés selon l'une quelconque des revendications précédentes 17 a) à c) ou 18 à 20 pour rigidifier et renforcer des structures creuses métalliques, en particulier des pièces creuses de carrosserie, telles que les cadres, les supports et les colonnes de carrosserie ou les portes dans la construction automobile.
